(19) Europäisches Patentamt
European Patent Office
Office européen des brevets

(11) EP 2 982 509 B1

(12) **EUROPEAN PATENT SPECIFICATION**

(45) Date of publication and mention of the grant of the patent:
**28.03.2018 Bulletin 2018/13**

(21) Application number: **14779986.0**

(22) Date of filing: **24.01.2014**

(51) Int Cl.:
***C08J 7/04*** *(2006.01)* *C08L 67/02* *(2006.01)*
*C08L 33/14* *(2006.01)*

(86) International application number:
**PCT/JP2014/051476**

(87) International publication number:
**WO 2014/162761 (09.10.2014 Gazette 2014/41)**

(54) **APPLIED FILM**

AUFGEBRACHTE FOLIE

FILM APPLIQUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2013 JP 2013080022**

(43) Date of publication of application:
**10.02.2016 Bulletin 2016/06**

(73) Proprietor: **Mitsubishi Chemical Corporation**
**Tokyo (JP)**

(72) Inventors:
- **KAWASAKI, Yoichi**
  **Maibara-shi**
  **Shiga 521-0234 (JP)**
- **KODA, Toshihiro**
  **Maibara-shi**
  **Shiga 521-0234 (JP)**
- **KAWASAKI, Taishi**
  **Maibara-shi**
  **Shiga 521-0234 (JP)**

(74) Representative: **Ter Meer Steinmeister & Partner**
**Patentanwälte mbB**
**Nymphenburger Straße 4**
**80335 München (DE)**

(56) References cited:
**WO-A1-2013/146155**
**JP-A- 2001 162 748**
**JP-A- 2006 181 770**
**JP-A- 2007 327 065**
**JP-A- 2011 201 172**
**JP-A- 2011 230 442**
**JP-A- 2012 025 850**

- **DATABASE WPI Week 200416 Thomson Scientific, London, GB; AN 2004-159952 XP002762524, & JP 2003 238734 A (DAICEL CHEM IND LTD) 27 August 2003 (2003-08-27)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 982 509 B1

## Description

### TECHNICAL FIELD

The present invention relates to a coated film, and more particularly, to a coated film comprising a polyester film as a base material which hardly suffers from deposition of oligomers thereon, for example, even after being exposed to a high temperature condition.

### BACKGROUND ART

Polyester films have been used in various application fields because they are excellent in transparency, dimensional stability, mechanical properties, heat resistance, and electrical properties.

In particular, in recent years, the polyester films have been frequently used as a base material for transparent conductive laminates having an increasing demand for touch panels, in place of glass. In the transparent conductive laminates, an ITO (indium tin oxide) film is formed on the polyester film as a base material directly or through an anchor layer by a sputtering method. Such a biaxially oriented polyester film is generally subjected to heat-processing.

For example, the biaxially oriented polyester film is allowed to stand at 150°C for 1 hr to subject the film to low-temperature shrinking (Patent Document 1). Also, the biaxially oriented polyester film is subjected to treatments such as heat treatment at 150°C for crystallization of ITO thereon (Patent Document 2).

However, the polyester film has such a problem that when subjected to such a high-temperature treatment for a long period of time, oligomers (low-molecular weight components of the polyester, in particular, an ester cyclic trimer thereof) included in the film are deposited and crystallized on a surface of the film, so that deterioration in visibility of the film owing to a whitened appearance thereof, defects in post-treatments, and contamination of a process or members present in the process tend to occur. For these reasons, the transparent conductive laminates using the polyester film as a base material tend to hardly exhibit satisfactory properties.

In addition, as the measure for preventing deposition of the above oligomers, there has been proposed, for example, the method in which a cured resin layer comprising a crosslinked product of a silicone resin and an isocyanate-based resin is formed on a polyester film (Patent Document 3). However, since the cured resin layer of the polyester film is formed by heat-curing, it is required to subject the film to a high-temperature treatment in order to dissociate a blocking agent for the isocyanate-based resin. Thus, in the method, there tend to occur curling or sagging of the film in the course of processing, and therefore careful attention must be paid upon handling the film.

In consequence, when a coating layer is formed on the polyester film to take a measure for reducing an amount of oligomers deposited thereon, it is required that the coating layer thus formed has a still higher heat resistance than that of conventional ones, and also exhibits a good performance of preventing deposition of oligomers by itself.

### CITATION LIST

### PATENT LITERATURE

Patent Document 1: Japanese Patent Application Laid-Open (KOKAI) No. 2007-42473
Patent Document 2: Japanese Patent Application Laid-Open (KOKAI) No. 2007-200823
Patent Document 3: Japanese Patent Application Laid-Open (KOKAI) No. 2007-320144

JP2006181770 (A) provides an easy adhesive polyester film constituted by coating one side of a film with a coating solution, which contains at least one kind of a water soluble or water dispersible polymer resin (A) and a polyvalent aldehyde compound (B), and drying the coated film to provide an easy adhesive layer on the film.

JP 2003 238734 (A) provides a gas-barrier composition which contains a saccharide, a formyl-containing compound, and an acidic catalyst, wherein the saccharide used may comprise a water soluble polysaccharide.

### SUMMARY OF INVENTION

### TECHNICAL PROBLEM

The present invention has been accomplished in view of the above conventional problems. An object of the present invention is to provide a coated film for optical purposes which is excellent in optical characteristics and visibility even after processing the film into a product for an optical member. More specifically, an object of the present invention

is to provide a coated film for optical purposes which can exhibit less increase in film haze, for example, even after subjected to heat treatments at 150°C for a long period of time, or subjected to steps under severe conditions such as sputtering steps under high tension conditions and durability tests under high-temperature and high-humidity conditions, and which is excellent in optical characteristics and visibility even after processing the film into a product for an optical member.

## SOLUTION TO PROBLEM

As a result of the present inventors' earnest study in view of the above problems, it has been found that these problems can be solved by a coated film comprising a single-layer polyester film having a specific structure as defined in claim 1. The present invention has been attained on the basis of this finding.

That is, in an aspect of the present invention, there is provided a coated film comprising a single-layer polyester film having an ester cyclic trimer content of not more than 0.7% by weight or a multilayer polyester film comprising a polyester surface layer having an ester cyclic trimer content of not more than 0.7% by weight, and a coating layer formed on at least one surface of the single polyester film or multilayer polyester film, the coating layer being formed form a coating solution comprising a polyvalent aldehyde-based compound and an ammonium group-containing polymer, wherein a content of the polyvalent aldehyde-based compound in the coating solution is in the range of 1 to 50% by weight based on a total weight of whole non-volatile components in the coating solution, and wherein a content of the ammonium group-containing polymer in the coating solution is in the range of 5 to 80% by weight based on a total weight of whole non-volatile components in the coating solution.

## ADVANTAGEOUS EFFECTS OF INVENTION

In accordance with the present invention, in order to further suppress deposition of oligomers, by using combination of a polyester layer having a less ester cyclic trimer content and a specific coating layer formed thereon, it is possible to obtain the effect of considerably reducing deposition of an ester cyclic trimer thereon. In addition, it is possible to obtain a product that has an excellent appearance without increase in haze or production of foreign matters since deposition of oligomers from a surface thereof is suppressed even when subjected to a high-temperature treatment for a long period of time. Therefore, the present invention has a high utility value from industrial viewpoints.

## DESCRIPTION OF EMBODIMENTS

The base material film used in the coated film of the present invention is formed of a polyester. The polyester may be produced by melt-polycondensing a dicarboxylic acid such as terephthalic acid, isophthalic acid, 2,6-naphthalenedicarboxylic acid, adipic acid, sebacic acid, 4,4'-diphenyldicarboxylic acid and 1,4-cyclohexyldicarboxylic acid or an ester of these acids with a glycol such as ethylene glycol, diethylene glycol, triethylene glycol, propylene glycol, 1,4-butanediol, neopentyl glycol and 1,4-cyclohexane dimethanol. The polyesters constituted of these acid components and glycol components may be produced by optionally using ordinary methods.

For example, there may be used the method in which first, a lower alkyl ester of an aromatic dicarboxylic acid and a glycol are subjected to transesterification reaction, or the aromatic dicarboxylic acid and the glycol are directly subjected to esterification reaction, to substantially form a bis-glycol ester of the aromatic dicarboxylic acid or an oligomer thereof, and then the obtained ester or oligomer is subjected to polycondensation by heating under reduced pressure. According to the aimed applications, an aliphatic dicarboxylic acid may also be copolymerized with the above components.

Typical examples of the polyester used in the present invention include polyethylene terephthalate, polyethylene 2,6-naphthalate and poly-1,4-cyclohexane dimethylene terephthalate, as well as those polyesters obtained by copolymerizing the above acid component or the above glycol component therewith. These polyesters may comprise other components or additives, if required.

The polymerization catalyst for production of the polyester is not particularly limited, and any suitable compounds conventionally known as the polymerization catalyst may be used therefor. Examples of the polymerization catalyst include an antimony compound, a titanium compound, a germanium compound, a manganese compound, an aluminum compound, a magnesium compound and a calcium compound. Of these compounds, the antimony compound has advantages such as inexpensiveness and a high catalytic activity. In addition, the titanium compound or the germanium compound is also preferably used because they exhibit a high catalytic activity, and are capable of conducting the polymerization even when used in a small amount, and enhancing a brightness of the obtained film owing to a less amount of the metal remaining in the film. Further, the use of the titanium compound is more preferred because the germanium compound is expensive.

In the present invention, in order to reduce an amount of an ester cyclic trimer deposited on the film after subjected to heat treatment, it is essentially required to use the single-layer polyester film having an ester cyclic trimer

content of not more than 0.7% by weight or the multilayer polyester film comprising a polyester surface layer having an ester cyclic trimer content of not more than 0.7% by weight.

The content of an ester cyclic trimer in polyester films used in general production processes is about 1% by weight. In the coated film of the present invention, the content of the ester cyclic trimer in the film is defined as being not more than 0.7% by weight when used in the above embodiments, whereby it is possible to highly exhibit the effect of preventing deposition of the ester cyclic trimer on a surface of the film. When the content of the ester cyclic trimer in the film is more than 0.7% by weight, there tends to arise such a problem that the film is deteriorated in film haze when used in high-temperature treatments for a long period of time or when subjected to processing steps under severe conditions, or the ester cyclic trimer is deposited on delivery rolls contacting with the film during the processing steps.

The content of the ester cyclic trimer in the polyester film used in the present invention is preferably not more than 0.6% by weight, and more preferably not more than 0.5% by weight. As the method for producing the polyester having a less ester cyclic trimer content, there may be used various known methods. For example, there may be mentioned the method in which the polyester is subjected to solid state polymerization after production thereof. In the method, it is possible to reduce the ester cyclic trimer content of the polyester by prolonging the solid state polymerization time.

The production of the polyester having a reduced ester cyclic trimer content requires high costs. It is advantageous that the control of the ester cyclic trimer content of the film to not more than 0.7% by weight is performed by using a polymer blend. In this case, it is preferred to use a polyester having an ester cyclic trimer content of not more than 0.7% by weight. The amount of the polyester blended is usually not less than 70% by weight, and preferably not less than 80% by weight. The lower limit of the ester cyclic trimer content of the polyester used in the polymer blend is usually 0.1% by weight, and preferably 0.2% by weight, from the viewpoint of costs.

The polyester film used in the present invention may have either a single layer structure or a multi-layer structure. The polyester film having a multi-layer structure is more advantageous from the viewpoint of costs, because it is satisfactory to use the polyester having an ester cyclic trimer content of not more than 0.7% by weight in a surface layer thereof only. In addition, in the polyester film having a multilayer structure, surface layers and inner layers of the film, or both surface layers and respective layers of the film may be constituted of various different kinds of polyesters according to aimed applications thereof.

The polyester film may be designed to have a 2-kind/3-layer multilayer structure in which a polyester raw material having a less ester cyclic trimer content is used in respective surface layers, whereby it is possible to reduce an amount of the ester cyclic trimer in the film after subjected to heat treatments.

In addition, in the multilayer polyester film, the thickness of the polyester layer having an ester cyclic trimer content of not more than 0.7% by weight is preferably large, since it is possible to effectively suppress deposition of the ester cyclic trimer from the polyester film. The thickness of the polyester layer having an ester cyclic trimer content of not more than 0.7% by weight is preferably not less than 1.5 μm, more preferably not less than 2.0 μm, and still more preferably not less than 2.5 μm. When the thickness of the polyester layer having an ester cyclic trimer content of not more than 0.7% by weight is less than 1.5 μm, the polyester film tends to suffer from increased film haze when subjected to heat treatments at 150°C for a long period of time, or subjected to processing steps under severe conditions such as sputtering steps under high tension-applying conditions and durability tests under high-temperature and high-humidity conditions, and therefore tends to be unsuitable as an optical member in view of optical characteristics and visibility thereof when processing the film into a product for an optical member.

The polyester film may also comprise particles for the purposes of ensuring a good traveling property of the resulting film and preventing occurrence of flaws thereon. Examples of the particles include inorganic particles such as silica, calcium carbonate, magnesium carbonate, calcium phosphate, kaolin, talc, aluminum oxide, titanium oxide, alumina, barium sulfate, calcium fluoride, lithium fluoride, zeolite and molybdenum sulfide; and organic particles such as crosslinked polymer particles and calcium oxalate. Further, there may also be used deposited particles obtained by precipitating and finely dispersing a part of metal compounds such as a catalyst during the process for production of the polyester.

On the other hand, the shape of the particles used is also not particularly limited, and may be any of a spherical shape, a massive shape, a bar shape, and a flat shape. Further, the hardness, specific gravity, color and the like of the particles are also not particularly limited. These particles may be used in combination of any two or more kinds thereof, if required.

The particle diameter and content of the particles used in the polyester film may be selected and determined according to the aimed applications and objects of the resulting film. The average particle diameter (d50) of the particles is usually in the range of not more than 3 μm, preferably 0.02 to 2.8 μm, and more preferably 0.03 to 2.5 μm. When the average particle diameter of the particles is more than 3 μm, the resulting film tends to exhibit an excessively high surface roughness, or the particles tend to fall off from the surface of the film.

The content of the particles in the polyester film is usually in the range of not more than 3% by weight, preferably 0.0003 to 1.0% by weight, and more preferably 0.0005 to 0.5% by weight based on the weight of the polyester layer

comprising the particles. When the polyester film comprises no particles or a less amount of the particles, although the resulting film has a high transparency and therefore provides a good film, the film tends to be insufficient in easy-slip property. As a result, it might be necessary to take another measure such as the measure of incorporating the particles into a coating layer thereof to enhance an easy-slip property of the film. On the other hand, when the content of the particles added to the polyester film is more than 3% by weight, the resulting film tends to be insufficient in transparency.

The method of adding the particles in the polyester layer is not particularly limited, and any conventionally known methods can be suitably used therefor. For example, the particles may be added at any optional stages in the process for production of the polyester constituting the respective layers. The particles are preferably added to the polyester after completion of the esterification reaction or transesterification reaction.

Meanwhile, the above polyester film may also comprise, in addition to the above particles, known additives such as an antioxidant, a thermal stabilizer, a lubricant, a dye, and a pigment, if required.

The thickness of the polyester film is not particularly limited, and the polyester film may have any thickness as long as it can be produced while maintaining a suitable film shape. The thickness of the polyester film is usually in the range of 10 to 300 μm, preferably 15 to 250 μm, and more preferably 20 to 200 μm.

Meanwhile, the coated film of the present invention preferably has a haze of not more than 10%, more preferably not more than 5%, and still more preferably not more than 4%. When the haze of the coated film is more than 10%, the resulting film tends to become unusable in view of its appearance when used in the applications of optical films.

The method of forming the film as used in the present invention is not particularly limited, and there may be adopted generally known film-forming methods. For example, a sheet obtained by melt-extrusion of the polyester is first drawn in one direction thereof at a temperature of 70 to 145°C at a draw ratio of 2 to 6 times by a roll drawing method to obtain a monoaxially drawn polyester film. Next, the thus obtained monoaxially drawn polyester film is drawn within a tenter in the direction perpendicular to the previous drawing direction at a temperature of 80 to 160°C at a draw ratio of 2 to 6 times and further subjected to heat-setting at a temperature of 150 to 250°C for 1 to 600 sec to obtain the aimed film. Furthermore, when subjected to the heat-setting, in the heat-setting zone and/or a cooling zone located at an outlet of the heat-setting zone, the resulting film is preferably subjected to relaxation within 20% in a longitudinal direction and/or a lateral direction thereof.

The coating layer may be provided by either a so-called off-line coating method in which the coating layer is formed on the polyester film subsequently to completion of formation of the polyester film, or a so-called in-line coating method in which the coating layer is formed during formation of the polyester film. Of these methods, preferred is the in-line coating method, in particular, there is more preferably used a coating/drawing method in which the film is drawn after the coating step.

The in-line coating method is a method in which the coating step is carried out during the process for production of the polyester film, more specifically, such a method in which the coating step is carried out in an optional stage from melt-extrusion of the polyester up to taking-up of the film through the drawing and heat-setting steps. In general, any of the substantially amorphous undrawn sheet obtained by melting and rapidly cooling the polyester, the monoaxially drawn film obtained by drawing the undrawn sheet, the biaxially oriented film before the heat-setting, or the film after the heat-setting but before the taking-up may be subjected to the coating step. For example, when the film is produced by a sequential biaxial drawing method, the method in which the monoaxially drawn film obtained by drawing the undrawn sheet in a longitudinal direction (length direction) thereof is subjected to the coating step, and then the resulting coated monoaxially drawn film is further drawn in a lateral direction thereof is more excellent, though not particularly limited thereto. The above method has merits in view of production costs because formation of the film and coating for forming the coating layer can be performed at the same time. In addition, since the drawing is carried out after completion of the coating, it is possible to form a uniform thin coating layer, resulting in stable properties of the resulting coating layer. Also, the polyester film before being biaxially drawn is first covered with a resin layer constituting the coating layer and then the polyester film and the coating layer are drawn at the same time, so that adhesion between the base material film and the coating layer can be strengthened. Further, upon the biaxial drawing of the polyester film, the film is drawn in a lateral direction thereof while grasping end portions of the film with tenter clips, and therefore constrained in both the longitudinal and lateral directions thereof. This allows the polyester film to be exposed to high temperature while keeping a flatness thereof without formation of wrinkles, when subjected to heat-setting. Therefore, the temperature used in the heat treatment to be conducted after the coating can be increased up to a high temperature which has not been reached in the other conventional methods, so that the film-forming property of the coating layer can be enhanced, and the adhesion between the coating layer and the polyester film can be strengthened. Upon production of the polyester film provided thereon with the coating layer, uniformity of the coating layer, improvement in film-forming property thereof and good adhesion between the coating layer and the film will result in desired properties of the resulting film in many cases.

In the coating/drawing method, the coating solution used for forming the coating layer is preferably in the form of an aqueous solution or a water dispersion from the viewpoints of easiness of handling, suitable working environments and safety. However, the coating solution may also comprise an organic solvent in such a range as not to deviate from

the scope of the present invention as long as a main medium of the coating solution is water.

It is essentially required that the coated film of the present invention comprises a coating layer that is formed form a coating solution comprising a polyvalent aldehyde-based compound. Meanwhile, the coating solution may also comprise the other components in addition to the aforementioned component.

The polyvalent aldehyde-based compound means a compound comprising two or more aldehyde groups or functional groups derived from an aldehyde group in a molecule thereof. Examples of the polyvalent aldehyde-based compound include polyvalent aldehyde compounds such as glyoxal, glutaraldehyde, terephthalaldehyde, cyclohexane dialdehyde, tricyclodecane dialdehyde, norbornane dialdehyde and suberaldehyde; and acetalized compounds, thioacetalized compounds, silyl-etherified compounds and imine-, iminium salt- or enamine-nitrogenated compounds which are obtained by allowing an aldehyde group of the above polyvalent aldehyde compounds to react (by protecting the aldehyde group).

The polyvalent aldehyde-based compound tends to be unstable, and therefore is preferably used in the form of a compound obtained by allowing an aldehyde group thereof to react (by protecting the aldehyde group). In view of a stability and a reactivity upon coating, the polyvalent aldehyde-based compound is more preferably used in the form of a compound obtained by reacting the aldehyde group with a hydroxyl group-containing compound, in particular, with a polyhydric alcohol compound. Of these compounds, preferred is a compound of such a type as is capable of forming a cyclic structure by reacting with the aldehyde group.

Examples of the polyhydric alcohol compound include polyhydric alcohols such as ethylene glycol, 1,3-propanediol and glycerol, and sugars such as glucose and galactose. Of these compounds, the sugars are preferred in view of a good coatability.

In addition, in view of a high strength and a good appearance of the resulting coating layer, the polyvalent aldehyde-based compound is preferably in the form of an aliphatic polyvalent aldehyde compound or a derivative thereof. Of these compounds, more preferred is glyoxal comprising a larger amount of aldehyde functional groups relative to a molecular weight thereof.

That is, in the present invention, the configuration of the polyvalent aldehyde-based compound is a compound of such a type as produced by reacting glyoxal with a polyhydric alcohol compound, in particular, a compound obtained by reacting glyoxal with sugars.

When forming the coating layer, in view of preventing deposition of the ester cyclic trimer on a surface of the film upon heating or improving a durability or a coatability of the coating layer, the above components are used in combination with an ammonium group-containing polymer, and optionally a polyvinyl alcohol or a crosslinking agent. Of these compounds, in view of more highly preventing deposition of the ester cyclic trimer, the ammonium group-containing polymer is used in combination.

That is, the configuration of the film of the present invention is a coted film comprising a coating layer formed of a coating solution comprising the polyvalent aldehyde-based compound and an ammonium group-containing polymer, and optionally at least one of a polyvinyl alcohol and a crosslinking agent.

The ammonium group-containing polymer means a high-molecular compound having an ammonium group in a molecule thereof, and there may be used, for example, a polymer comprising a monomer component having an ammonium group and an unsaturated double bond.

Specific examples of the above polymer include polymers having a constitutional element represented by the following formula (1) or (2) as a repeating unit. These polymers may be in the form of a homopolymer or a copolymer, or a copolymer obtained by further copolymerizing the polymer with the other plural components.

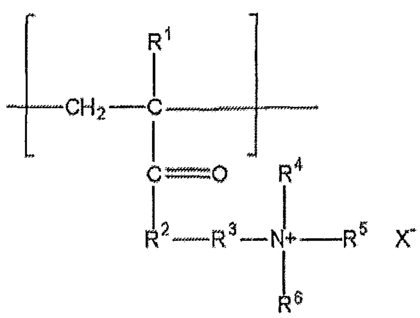

(1)

In the above formula (1), $R^2$ is -O- or -NH-; $R^3$ is an alkylene group or the other structure capable of establishing the structure represented by the formula (2); and $R^1$, $R^4$, $R^5$ and $R^6$ are respectively a hydrogen atom, an alkyl group, or a phenyl group in which the alkyl group and the phenyl group may be substituted with the following substituent groups. Examples of the substituent groups include a hydroxyl group, an amide group, an ester group, an alkoxy group, a phenoxy

group, a naphthoxy group, a thioalkoxy group, a thiophenoxy group, a cycloalkyl group, a trialkylammoniumalkyl group, a cyano group and a halogen.

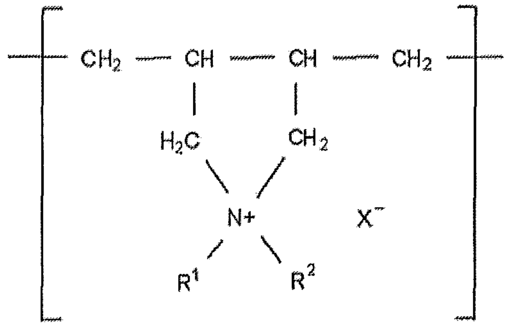

(2)

In the above formula (2), $R^1$ and $R^2$ are each independently a hydrogen atom, an alkyl group, or a phenyl group in which the alkyl group and the phenyl group may be substituted with the following substituent groups. Examples of the substituent groups include a hydroxyl group, an amide group, an ester group, an alkoxy group, a phenoxy group, a naphthoxy group, a thioalkoxy group, a thiophenoxy group, a cycloalkyl group, a trialkylammoniumalkyl group, a cyano group and a halogen. Also, $R^1$ and $R^2$ may be chemically bonded to each other. Examples of the bonded groups include $-(CH_2)_m-$ (m = integer of 2 to 5), $-CH(CH_3)CH(CH_3)-$, -CH=CH-CH=CH-, -CH=CH-CH=N-, -CH=CH-N=C-, $-CH_2OCH_2-$, and - $(CH_2)_2O(CH_2)_2-$.

In the above formulae (1) and (2), $X^-$ may be appropriately selected in such a range as not to deviate from the scope of the present invention. Examples of $X^-$ include a halogen ion, a sulfonate ion, a phosphate ion, a nitrate ion, an alkyl sulfonate ion and a carboxylate ion.

The polymers comprising the constitutional element represented by the formula (1) are preferably used because the resulting coating layer is excellent in transparency. However, in the coating/drawing method, the resulting coating layer tends to be sometimes deteriorated in heat resistance. Therefore, when using the polymers in the coating/drawing method, it is preferred that $X^-$ is not a halogen atom.

The compounds comprising the constitutional element represented by the formula (2) or the other ammonium salt group in a polymer skeleton thereof are preferably used because they are excellent in heat resistance.

Also, the polymers obtained by copolymerizing the constitutional element represented by the formula (1) or (2) with a polyethylene glycol-containing (meth)acrylate have a soft structure, and therefore are preferably used in the coating/drawing method because the resulting coating layer is excellent in uniformity.

Alternatively, the coating layer having the same excellent uniformity as described above may also be formed by applying a coating solution comprising a polyethylene glycol-containing (meth)acrylate polymer.

Specific examples of the polyethylene glycol-containing (meth)acrylate polymer include polymers produced from polyethylene glycol monoacrylate, polypropylene glycol monoacrylate, polyethylene glycol diacrylate (whose polyethylene glycol unit preferably has a polymerization degree of 4 to 14), polypropylene glycol diacrylate, polytetramethylene glycol diacrylate, poly(ethylene glycol-tetramethylene glycol) diacrylate, poly(propylene glycol-tetramethylene glycol) diacrylate, polyethylene glycol-polypropylene glycol-polyethylene glycol diacrylate, polypropylene glycol-polybutylene glycol monomethacrylate, methoxy polyethylene glycol monomethacrylate, methoxy polyethylene glycol monoacrylate, octoxy polyethylene glycol-polypropylene glycol monomethacrylate, octoxy polyethylene glycol-polypropylene glycol monoacrylate, lauroxy polyethylene glycol monomethacrylate, lauroxy polyethylene glycol monoacrylate, stearoxy polyethylene glycol monomethacrylate, stearoxy polyethylene glycol monoacrylate, allyloxy polyethylene glycol monomethacrylate, and allyloxy polyethylene glycol monoacrylate, as a starting material.

Also, the number-average molecular weight of the ammonium group-containing polymer is 1000 to 500000, preferably 2000 to 350000, and more preferably 5000 to 200000. When the number-average molecular weight of the ammonium group-containing polymer is less than 1000, the resulting coating film tends to have a weak strength or tends to be deteriorated in heat-resistant stability. On the other hand, when the number-average molecular weight of the ammonium group-containing polymer is more than 500000, the coating solution tends to exhibit an excessively high viscosity and therefore tends to be deteriorated in handling property and coatability.

As the polyvinyl alcohol, there may be used conventionally known polyvinyl alcohols including modified compounds obtained by partially acetalizing or butyralizing polyvinyl alcohol. The polymerization degree of the polyvinyl alcohol is not particularly limited, and is usually not less than 100, and preferably in the range of 300 to 40000. When the polymerization degree of the polyvinyl alcohol is less than 100, the resulting coating layer tends to be deteriorated in water resistance. The saponification degree of the polyvinyl alcohol is also not particularly limited, and a saponified product of polyvinyl acetate having a saponification degree of usually not less than 70 mol%, preferably 70 to 99.9 mol%,

more preferably 80 to 97 mol% and still more preferably 86 to 95 mol% may be practically used.

As the crosslinking agent, there may be used various known crosslinking agents. Examples of the crosslinking agent include a melamine compound, an oxazoline compound, an epoxy compound, an isocyanate-based compound, a carbodiimide-based compound and a silane coupling compound. Of these compounds, in view of enhancing an adhesion durability of the coating layer, in particular, when forming a surface functional layer thereon, there may be more suitably used an oxazoline compound, an epoxy compound, an isocyanate-based compound and a carbodiimide-based compound. However, when using an oxazoline compound, an epoxy compound, an isocyanate-based compound or a carbodiimide-based compound in combination with the above compound, the resulting coating layer tends to be deteriorated in effect of preventing deposition of the ester cyclic trimer. Further, in view of preventing deposition of the ester cyclic trimer on a surface of the film owing to heating and improving a durability or a coatability of the coating layer, a melamine compound can be suitably used.

Examples of the melamine compound usable in the present invention include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by subjecting a urea to co-condensation with a part of melamine. Further, a catalyst may also be used to enhance a reactivity of the melamine compound.

The preferred oxazoline compounds are, in particular, polymers having an oxazoline group, which may be obtained in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, or cyclohexyl); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, or cyclohexyl); vinyl esters such as vinyl acetate and vinyl propionate; vinyl ethers such as methyl vinyl ether and ethyl vinyl ether; $\alpha$-olefins such as ethylene and propylene; halogen-containing $\alpha,\beta$-unsaturated monomers such as vinyl chloride, vinylidene chloride and vinyl fluoride; and $\alpha,\beta$-unsaturated aromatic monomers such as styrene and $\alpha$-methyl styrene. These other monomers may be used alone or in combination of any two or more thereof.

The amount of an oxazoline group in the oxazoline compound included in the coating layer is usually in the range of 0.5 to 10 mmol/g, preferably 3 to 9 mmol/g, and more preferably 5 to 8 mmol/g. When the amount of an oxazoline group in the oxazoline compound lies within the above-specified range, the resulting coating film can be improved in durability.

Examples of the epoxy compound include condensation products of epichlorohydrin with a hydroxyl group of ethylene glycol, polyethylene glycol, glycerol, polyglycerol, bisphenol A, or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

The isocyanate-based compound is a compound having an isocyanate derivative structure such as typically an isocyanate and a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as $\alpha,\alpha,\alpha',\alpha'$-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl

cyclohexane diisocyanate, isophorone diisocyanate, methylene-bis(4-cyclohexyl isocyanate) and isopropylidene dicyclohexyl diisocyanate. Further examples of the isocyanate include polymers and derivatives of biuret compounds, isocyanurate compounds, uretdione compounds, or carbodiimide-modified compounds of these isocyanates. These isocyanates may be used alone or in combination of any two or more thereof. Of these isocyanates, in view of avoiding yellowing due to irradiation with ultraviolet rays, aliphatic isocyanates and alicyclic isocyanates are more suitably used as compared to aromatic isocyanates.

When the isocyanate-based compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as methyl isobutanoyl acetate, dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving a dispersibility or a crosslinkability of the isocyanate-based compounds.

The carbodiimide-based compound is preferably in the form of a polycarbodiimide-based compound having two or more carbodiimide structures in a molecule thereof in view of a good adhesion property of the resulting coating layer.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

The content of a carbodiimide group in the carbodiimide-based compound is usually in the range of 100 to 1000, preferably 250 to 800, and more preferably 300 to 700, in terms of a carbodiimide equivalent (a weight [g] of the carbodiimide-based compound providing 1 mol of a carbodiimide group). When the content of a carbodiimide group in the carbodiimide-based compound used lies within the above-specified range, the resulting coating film can be improved in durability.

Further, in order to improve a water solubility or a water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving a performance of the coating layer by allowing the crosslinking agents to react with the compounds contained therein during a drying step or a film-forming step thereof. Therefore, it is estimated that the resulting coating layer comprises the unreacted crosslinking agent, compounds obtained after the reaction, or a mixture thereof.

In the case where such a crosslinking component is incorporated in the coating solution, a crosslinking promoting component, for example, a crosslinking catalyst, may be simultaneously used in combination therewith.

Ina addition, upon forming the coating layer, polymers can be used in the coating layer for enhancing a coating appearance, an adhesion property to various surface functional layers when they are formed on the coating layer.

Specific examples of the polymers include polyester resins, acrylic resins, urethane resins, conductive polymers, polyalkylene glycols, polyalkylene imines, methyl cellulose, hydroxy cellulose, and starches. Among these polymers, in view of improving an adhesion property of the coating layer to various surface functional layers, preferred are polyester resins, acrylic resins and urethane resins.

Also, upon forming the coating layer, for the purpose of improving an anti-blocking property and a slipping property of the coating layer, particles may be used in combination therein. The average particle diameter of the particles is preferably in the range of not more than 1.0 μm, more preferably not more than 0.5 μm, and still more preferably not more than 0.2 μm from the viewpoint of a good transparency of the resulting film. In addition, in order to effectively enhance a slipping property, the lower limit of the average particle diameter of the particles is preferably not less than 0.005 μm, and more preferably not less than 0.01 μm. Specific examples of the particles include silica, alumina, kaolin, calcium carbonate, or organic particles. Of these particles, preferred is silica from the viewpoint of a good transparency of the resulting coating layer.

Further, upon forming the coating layer, various additives such as a defoaming agent, a coatability improver,

a thickening agent, an organic lubricant, an antistatic agent, an ultraviolet absorber, an antioxidant, a foaming agent, a dye and a pigment may also be used in combination, if required, unless the subject matter of the present invention is adversely affected by addition thereof to the coating layer.

The content of the polyvalent aldehyde-based compound in the coating solution forming the coating layer is in the range of 1 to 50% by weight, and preferably 2 to 30% by weight based on a total amount of whole non-volatile components in the coating solution. When the content of the polyvalent aldehyde-based compound in the coating solution forming the coating layer is out of the above-specified range, it is not possible to effectively prevent deposition of the ester cyclic trimer after heating, or the resulting coating layer tends to be deteriorated in coating appearance.

The content of the ammonium group-containing polymer in the coating solution forming the coating layer is in the range of 5 to 80% by weight and preferably 10 to 70% by weight based on a total amount of whole non-volatile components in the coating solution. When the content of the ammonium group-containing polymer in the coating solution forming the coating layer is out of the above-specified range, it is not possible to effectively prevent deposition of the ester cyclic trimer after heating, or the resulting coating film tends to be deteriorated in uniformity.

The content of the polyvinyl alcohol in the coating solution forming the coating layer is usually in the range of 5 to 80% by weight and preferably 10 to 35% by weight based on a total amount of whole non-volatile components in the coating solution. When the content of the polyvinyl alcohol in the coating solution forming the coating layer is out of the above-specified range, it is not possible to effectively prevent deposition of the ester cyclic trimer after heating, or the resulting coating layer tends to be deteriorated in coating appearance.

The content of the crosslinking agent in the coating solution forming the coating layer is usually in the range of 5 to 80% by weight and preferably 10 to 50% by weight based on a total amount of whole non-volatile components in the coating solution. When the content of the crosslinking agent in the coating solution forming the coating layer is out of the above-specified range, it is not possible to effectively prevent deposition of the ester cyclic trimer after heating, or the resulting coating layer tends to be deteriorated in coating appearance.

The thickness of the coating layer in the finally obtained film is usually in the range of 0.003 to 1 μm, preferably 0.005 to 0.5 μm, and more preferably 0.01 to 0.2 μm. When the thickness of the coating layer is less than 0.003 μm, it might be difficult to reduce an amount of the ester cyclic trimer deposited which tend to be emerged from the film, to a sufficient extent. On the other hand, when the thickness of the coating layer is more than 1 μm, the resulting coating layer tends to be deteriorated in appearance, or the resulting film tends to suffer from problems such as blocking.

Examples of the coating method of applying the coating solution onto the polyester film include conventionally known coating methods such as an air doctor coating method, a blade coating method, a rod coating method, a bar coating method, a knife coating method, a squeeze coating method, an impregnation coating method, a reverse roll coating method, a transfer roll coating method, a gravure coating method, a kiss roll coating method, a cast coating method, a spray coating method, a curtain coating method, a calender coating method and an extrusion-coating method.

In order to improve a coatability and a bonding property of the coating agent to the film, the film may be previously subjected to chemical treatments, corona discharge treatment, plasma treatment, before coated therewith.

In some cases, it may be required that the coated film of the present invention has a high transparency even after exposed to a high-temperature atmosphere for a long period of time, for example, when used in the applications such as touch panels. From the viewpoints, in order to obtain the coated film having a high transparency, the amount of change in haze (ΔH) of the film when subjected to heat treatment (at 180°C for 90 min) is preferably not more than 0.5%, more preferably not more than 0.4%, and still more preferably not more than 0.3%. When ΔH is more than 0.5%, the resulting film tends to be deteriorated in visibility with the increase in haze of the film owing to deposition of the ester cyclic trimer thereon. As a result, the coated film tends to be unsuitable, for example, for use in the applications such as touch panels in which a high visibility is required.

In addition, from the viewpoint of reducing an amount of the ester cyclic trimer deposited, the coated film of the present invention is subjected to heat treatment (at 180°C for 90 min), such that the amount of the ester cyclic trimer extracted from the surface of the film with dimethylformamide is controlled to preferably not more than 0.6 $mg/m^2$, more preferably not more than 0.4 $mg/m^2$, and still more preferably not more than 0.3 $mg/m^2$. When the amount of the ester cyclic trimer extracted is more than 0.6 $mg/m^2$, the amount of the ester cyclic trimer deposited on the film tends to be increased when subsequently subjected to a heat treatment in a high-temperature atmosphere for a long period of time, for example, such a heat treatment conducted at 180°C for 90 min, so that the resulting film tends to be deteriorated in transparency, or there tends to occur such a fear that the process is severely contaminated.

## EXAMPLES

The present invention is described in more detail below by Examples. However, these Examples are only illustrative and not intended to limit the present invention thereto, and other changes and modifications are possible unless they depart from the scope of the present invention. Incidentally, the evaluating methods used in the following Examples and Comparative Examples are as follows.

(1) Method of measuring intrinsic viscosity of polyester:

One gram of a polyester was accurately weighed, and mixed and dissolved in 100 mL of a mixed solvent comprising phenol and tetrachloroethane at a weight ratio of 50:50, and a viscosity of the resulting solution was measured at 30°C.

(2) Method of measuring average particle diameter (d50; μm):

Using a centrifugal precipitation type particle size distribution measuring apparatus "SA-CP3 Model" manufactured by Shimadzu Corp., the particle size corresponding to a cumulative fraction of 50% (on a weight basis) in equivalent spherical distribution of the particles was measured as an average particle diameter of the particles.

(3) Method of measuring content of ester cyclic trimer in polyester raw material:

About 200 mg of the polyester raw material was weighed and dissolved in 2 mL of a mixed solvent comprising chloroform and HFIP (hexafluoro-2-isopropanol) at a mixing ratio of 3:2. After dissolving the raw material, 20 mL of chloroform was further added to the resulting solution, and then 10 mL of methanol was also added little by little thereto. The obtained reaction solution was subjected to filtration to remove a precipitate therefrom. Further, the resulting precipitate was washed with a mixed solvent comprising chloroform and methanol at a mixing ratio of 2:1 to recover a filtrate and the washing solution, followed by concentrating the obtained solution using an evaporator and then drying and solidifying the concentrated product. The resulting dried solid was dissolved in 25 mL of DMF (dimethylformamide), and the resulting solution was fed to a liquid chromatograph "LC-7A" manufactured by Shimadzu Corporation to measure an amount of an ester cyclic trimer in DMF. The obtained value was divided by the amount of the polyester raw material dissolved in the chloroform/HFIP mixed solvent to determine a content (% by weight) of the ester cyclic trimer therein. The amount of the ester cyclic trimer in DMF was determined from a peak area ratio between a peak area of a control sample and a peak area of the sample to be measured (absolute calibration curve method).

The control sample was prepared by accurately weighing a previously sampled ester cyclic trimer and dissolving the ester cyclic trimer in DMF accurately weighed.

Meanwhile, the operating conditions of the liquid chromatograph are as follows.

Mobile phase A: Acetonitrile
Mobile phase B: 2% Acetic acid aqueous solution
Column: "MCI GEL ODS 1HU" manufactured by Mitsubishi Chemical Corporation
Column temperature: 40°C
Flow rate: 1 mL/min
Detection wavelength: 254 nm

(4) Method of calculating content of ester cyclic trimer in polyester film:

Calculated from the content of the ester cyclic trimer in the polyester raw material which was obtained by the above method (3).

(5) Thickness of coating layer:

The film was fixed in an embedding resin, and cut in section using a microtome. The cut film was dyed with 2% osmic acid at 60°C for 2 hr to prepare a sample. The thus prepared sample was observed by a transmission electron microscope "JEM2010" available from Nippon Denshi Co., Ltd., to measure a thickness of the coating layer. The measurement of the thickness of the coating layer was conducted at 15 positions of the film in total, and an average value of the thicknesses measured at 9 positions of the film except for the larger thicknesses measured at 3 positions of the film from the maximum side and the smaller thicknesses measured at 3 positions of the film from the minimum side was regarded as a thickness of the coating layer.

(6) Method for heat treatment of film:

A Kent paper was overlapped and fixed on an exposed surface of the sample to be measured, and allowed to stand in a nitrogen atmosphere at 180°C for 90 min to subject the sample to heat treatment.

(7) Measurement of haze of film:

The haze of the sample film was measured using a haze meter "HM-150" manufactured by Murakami Color Research Laboratory Co., Ltd., according to JIS K 7136.

(8) Measurement of increase in haze (ΔH) of film by heat treatment:

First, a coating agent having the following composition was applied onto a surface of the sample film opposed to its surface on which the coating layer of the present invention was provided, such that the thickness of the resulting coating layer after cured was 3 μm, and then dried in a hot air dryer-type oven set to 80°C for 1 min. Next, the thus dried coating layer was irradiated with light from a distance 100 mm using a 120 W/cm energy high-pressure mercury lamp at an intensity of 110 $mJ/cm^2$ for about 7 sec to cure the coating layer, thereby obtaining a laminated film on which an active energy ray cured resin layer.

(Composition of coating agent)

A dilute solution prepared by diluting a mixture comprising an ultraviolet-curable urethane-acrylic resin "SHIKOH 7600B" produced by Nippon Synthetic Chemical Industry Co., Ltd., and a photopolymerization initiator "Irgacure 651" produced by Ciba Speciality Chemicals Corp., at a weight ratio of 100/5 with methyl ethyl ketone into a concentration of 30% by weight, was used as a coating agent.
The obtained sample was measured for its haze by the method described in the above (7) (haze 1).
Next, the surface of the sample to be measured which was opposed to its surface on which the active energy ray cured resin layer was provided was heated by the method described in the above (6), and then measured for its haze by the method described in the above (7) (haze 2).

$$\Delta H = (\text{haze } 2) - (\text{haze } 1)$$

The lower ΔH indicates a less amount of oligomers deposited on the film when subjected to high-temperature treatment, and therefore exhibits a better result.

(9) Measurement of amount of ester cyclic trimer deposited on surface of coated film:

The polyester film was heated in air at 180°C for 90 min. Thereafter, the polyester film thus heat-treated was formed into an open-topped rectangular box of 10 cm in each of length and width and 3 cm in height such that the surface to be measured (coating layer) faced inside. Next, 4 mL of DMF (dimethylformamide) was charged in the thus formed box and allowed to stand therein for 3 min, and then recovered. The thus recovered DMF was fed to a liquid chromatograph "LC-7A" manufactured by Shimadzu Corp., to measure a content of an ester cyclic trimer in DMF. The thus obtained value was divided by an area of the film contacted with DMF to calculate an amount ($mg/m^2$) of the ester cyclic trimer deposited on the surface of the film. The content of the ester cyclic trimer in DMF was calculated according to the absolute calibration curve method described in the above method (3) of measuring the content of the ester cyclic trimer in the polyester raw material.
The polyesters used in the respective Examples and Comparative Examples were prepared as follows.

(Method of producing polyester (A))

One hundred parts by weight of dimethyl terephthalate and 60 parts by weight of ethylene glycol as starting materials were charged together with 0.09 part by weight of magnesium acetate tetrahydrate as a catalyst into a reaction vessel, and the reaction therebetween was initiated at 150°C. The reaction temperature was gradually raised while distilling off methanol, and allowed to reach 230°C after 3 hr. After 4 hr, the transesterification reaction was substantially terminated. The obtained reaction mixture was mixed with 0.04 part of ethyl acid phosphate and then with 0.04 part of antimony trioxide. The resulting mixture was subjected to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, an agitation power in the reaction vessel was monitored, and the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel. As a result, it was confirmed that the thus obtained polyester (A) had an intrinsic viscosity of

0.63 and an ester cyclic trimer content of 0.97% by weight.

(Method of producing polyester (B))

The polyester (A) was previously crystallized at 160°C, and then subjected to solid state polymerization at 220°C in a nitrogen atmosphere, thereby obtaining a polyester (B) having an intrinsic viscosity of 0.75 and an ester cyclic trimer content of 0.46% by weight.

<Method for producing polyester (C)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester as produced, were subjected to esterification reaction at 260°C in a nitrogen atmosphere. Successively, tetrabutyl titanate in an amount of 50 ppm based on the polyester as produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (C) having an intrinsic viscosity of 0.61 and having an ester cyclic trimer content of 1.02% by weight.

(Method of producing polyester (D))

The polyester (C) was previously crystallized at 160°C, and then subjected to solid state polymerization at 210°C in a nitrogen atmosphere, thereby obtaining a polyester (D) having an intrinsic viscosity of 0.72 and an ester cyclic trimer content of 0.50% by weight.

(Method of producing polyester (E))

The same procedure as described in the above production of the polyester A was conducted except that after adding 0.04 part of ethyl acid phosphate, 0.5 part of silica particles having an average particle diameter (d50) of 1.6 μm which were dispersed in ethylene glycol and 0.04 part of antimony trioxide were added to the resulting mixture, and the polycondensation reaction was terminated at the time at which a viscosity of the reaction solution reached the value corresponding to an intrinsic viscosity of 0.65, thereby obtaining a polyester (E). As a result, it was confirmed that the thus obtained polyester (E) had an intrinsic viscosity of 0.65 and an ester cyclic trimer content of 0.82% by weight.

Also, as the components to be incorporated in the coating solution, there were used was the following compounds.

(A1): Polyvalent aldehyde-based compound produced by reacting glyoxal with anhydrous glucose.
(B1): Copolymer having a methyl sulfonate counter ion and a number-average molecular weight of 150000 which was constituted of 2-(trimethylamino)ethyl methacrylate/ethyl methacrylate/butyl methacrylate/polyethylene glycol-containing monoacrylate at a weight ratio of 75/12/15/30.
(B2): 2-Hydroxy 3-methacryloxy propyl trimethyl ammonium salt polymer having a methyl sulfonate counter ion and a number-average molecular weight of 130000.
(B3): Polyvinyl alcohol having a saponification degree of 88 mol% and a polymerization degree of 500.
(B4): Acetoacetyl group-containing polyvinyl alcohol having a saponification degree of 93 mol%.
(B5): Polyethylene glycol-containing monoacrylate polymer having a number-average molecular weight of 20000.
(C1): Hexamethoxy methylol melamine.
(C2): Blocked polyisocyanate synthesized by the following method.
While stirring 1000 parts of hexamethylene diisocyanate at 60°C, 0.1 part of tetramethyl ammonium caprate as a catalyst was added thereto. After 4 hr, 0.2 part of phosphoric acid was added to the reaction mixture to terminate the reaction, thereby obtaining an isocyanurate-type polyisocyanate composition. Then, 100 parts of the resulting isocyanurate-type polyisocyanate composition, 42.3 parts of methoxy polyethylene glycol having a number-average molecular weight of 400 and 29.5 parts of propylene glycol monomethyl ether acetate were charged, and held at 80°C for 7 hr. Thereafter, while maintaining the temperature of the reaction solution at 60°C, 35.8 parts of methyl isobutanoyl acetate, 32.2 parts of diethyl malonate and 0.88 part of a 28% methanol solution of sodium methoxide were added to the reaction solution, and the resulting reaction mixture was held for 4 hr. Then, 58.9 parts of n-butanol was added to the reaction mixture, and the obtained reaction solution was held at 80°C for 2 hr. Thereafter, 0.86 part of 2-ethylhexyl acid phosphate was added to the reaction solution, thereby obtaining a blocked polyisocyanate.

(C3): Acrylic polymer comprising an oxazoline group and a polyalkyleneoxide chain (oxazoline group content: 7.7 mmol/g).
(C4): Polyglycerol polyglycidyl ether.
(F1): Silica particles having an average particle diameter of 0.07 μm.
(F2): Alumina-modified silica particles having an average particle diameter of 0.02 μm.

Example 1:

A mixture obtained by blending the polyesters (B) and (E) at a weight ratio of 80/20 as a raw material for surface layers, and the polyester (A) only as a raw material for an intermediate layer, were respectively charged into two extruders, heated and melted therein at 285°C, and then coextruded therefrom into a two-kind/three-layer structure (A/B/A) in which the A layers were outermost layers (surface layers) and the B layer was an intermediate layer such that the thickness ratio A/B/A was 4/117/4, and while closely contacting with a mirror-finished chilled drum whose surface was controlled to a temperature of 40 to 50°C by an electrostatic pinning method, the thus extruded sheet was cooled and solidified, thereby obtaining an undrawn polyethylene terephthalate film. Next, the thus obtained film was drawn at a draw ratio of 3.4 times in a longitudinal direction thereof while passing through a group of heated rolls at 85°C by utilizing a difference between peripheral speeds of the rolls. Thereafter, an aqueous coating solution 1 shown in the below-mentioned Table 1 was applied on one surface of the thus obtained longitudinally drawn film. Then, the thus coated longitudinally drawn film was introduced into a tenter drawing machine in which the film was drawn at 100°C at a draw ratio of 4.0 times in a lateral direction thereof and then subjected to heat-setting at 230°C. Then, the obtained drawn film was relaxed by 2% in a lateral direction thereof, thereby obtaining a biaxially oriented polyethylene terephthalate film having a thickness of 125 μm which was provided on the surface thereof with a coating layer having a thickness of 0.02 μm (after dried).

As a result, it was confirmed that the thus obtained polyester film exhibited good properties, i.e., a less increase in haze (ΔH) of the film owing to the heat treatment and a less amount of the ester cyclic trimer deposited thereon. Properties of the thus obtained film are shown in Table 3 below.

Examples 2 to 13:

The same procedure as in Example 1 was conducted except that the coating agent composition was changed as shown in Table 1, thereby obtaining polyester films. As a result, it was confirmed that the obtained polyester films exhibited good properties as shown in Table 3 below, i.e., a less increase in haze (ΔH) of the film by the heat treatment and a less amount of the ester cyclic trimer deposited thereon.

Example 14:

The same procedure as in Example 1 was conducted except that the thickness ratio A/B/A was changed to 5/178/5, and the thickness of the polyester film was changed to 188 μm, thereby obtaining a polyester film. Properties of the thus obtained polyester film are shown in Table 3 below.

Example 15:

The same procedure as in Example 1 was conducted except that the thickness ratio A/B/A was changed to 2.5/45/2.5, and the thickness of the polyester film was changed to 50 μm, thereby obtaining a polyester film. Properties of the thus obtained polyester film are shown in Table 3 below.

Example 16:

The same procedure as in Example 1 was conducted except that the thickness ratio A/B/A was changed to 1.5/22/1.5, and the thickness of the polyester film was changed to 25 μm, thereby obtaining a polyester film. Properties of the thus obtained polyester film are shown in Table 3 below.

Example 17:

A mixture obtained by blending the polyesters (A) and (E) at a weight ratio of 80/20 as a raw material for surface layers, and the polyester (D) only as a raw material for an intermediate layer, were respectively charged into two extruders, heated and melted therein at 285°C, and then coextruded therefrom into a two-kind/three-layer structure (A/B/A) in which the A layers were outermost layers (surface layers) and the B layer was an intermediate layer such that the thickness ratio A/B/A was 1.5/22/1.5, and while closely contacting with a mirror-finished chilled drum whose surface was controlled

to a temperature of 40 to 50°C by an electrostatic pinning method, the thus extruded sheet was cooled and solidified, thereby obtaining an undrawn polyethylene terephthalate film. Next, the thus obtained film was drawn at a draw ratio of 3.4 times in a longitudinal direction thereof while passing through a group of heated rolls at 85°C by utilizing a difference between peripheral speeds of the rolls. Thereafter, an aqueous coating solution 1 shown in the below-mentioned Table 1 was applied on one surface of the thus obtained longitudinally drawn film. Then, the thus coated longitudinally drawn film was introduced into a tenter drawing machine in which the film was drawn at 100°C at a draw ratio of 4.0 times in a lateral direction thereof and then subjected to heat-setting at 230°C. Then, the obtained drawn film was relaxed by 2% in a lateral direction thereof, thereby obtaining a biaxially oriented polyethylene terephthalate film having a thickness of 25 μm which was provided on the surface thereof with a coating layer having a thickness of 0.02 μm (after dried).

Example 18:

A mixture obtained by blending the polyesters (D) and (E) at a weight ratio of 80/20 as a raw material for surface layers, and the polyester (D) only as a raw material for an intermediate layer, were respectively charged into two extruders, heated and melted therein at 285°C, and then coextruded therefrom into a two-kind/three-layer structure (A/B/A) in which the A layers were outermost layers (surface layers) and the B layer was an intermediate layer such that the thickness ratio A/B/A was 1.5/22/1.5, and while closely contacting with a mirror-finished chilled drum whose surface was controlled to a temperature of 40 to 50°C by an electrostatic pinning method, the thus extruded sheet was cooled and solidified, thereby obtaining an undrawn polyethylene terephthalate film. Next, the thus obtained film was drawn at a draw ratio of 3.4 times in a longitudinal direction thereof while passing through a group of heated rolls at 85°C by utilizing a difference between peripheral speeds of the rolls. Thereafter, an aqueous coating solution 1 shown in the below-mentioned Table 1 was applied on one surface of the thus obtained longitudinally drawn film. Then, the thus coated longitudinally drawn film was introduced into a tenter drawing machine in which the film was drawn at 100°C at a draw ratio of 4.0 times in a lateral direction thereof and then subjected to heat-setting at 230°C. Then, the obtained drawn film was relaxed by 2% in a lateral direction thereof, thereby obtaining a biaxially oriented polyethylene terephthalate film having a thickness of 25 μm which was provided on the surface thereof with a coating layer having a thickness of 0.02 μm (after dried).

Examples 19 and 20:

The same procedure as in Example 18 was conducted except that the coating agent composition was changed as shown in Table 1, thereby obtaining polyester films.

Comparative Examples 1 to 7:

The same procedure as in Example 1 was conducted except that the coating agent composition was changed as shown in Table 1, thereby obtaining polyester films. As a result of evaluating the thus obtained coated films, it was confirmed that, as shown in Table 3, the respective obtained coated films exhibited a large increase in haze of the film owing to the heat treatment and a large amount of the ester cyclic trimer deposited thereon.

Comparative Example 8:

The same procedure as in Example 1 was conducted except that a mixture obtained by blending the polyesters (A) and (E) at a weight ratio of 80%/20% was used as a raw material for the A layer, thereby obtaining a polyester film. As a result of evaluating the thus obtained coated film, it was confirmed that, as shown in Table 3, the obtained coated film exhibited a large increase in haze of the film owing to the heat treatment and a large amount of the ester cyclic trimer deposited thereon.

Comparative Example 9:

The same procedure as in Comparative Example 8 was conducted except that in Comparative Example 8, the thickness ratio A/B/A was changed to 2.5/45/2.5, and the thickness of the polyester film was changed to 50 μm, thereby obtaining a polyester film. Properties of the thus obtained polyester film are shown in Table 3 below.

Comparative Example 10:

A mixture obtained by blending the polyesters (C) and (E) at a weight ratio of 80/20 as a raw material for surface layers, and the polyester (C) only as a raw material for an intermediate layer, were respectively charged into two extruders, heated and melted therein at 285°C, and then coextruded therefrom into a two-kind/three-layer structure (A/B/A) in which

the A layers were outermost layers (surface layers) and the B layer was an intermediate layer such that the thickness ratio A/B/A was 1.5/22/1.5, and while closely contacting with a mirror-finished chilled drum whose surface was controlled to a temperature of 40 to 50°C by an electrostatic pinning method, the thus extruded sheet was cooled and solidified, thereby obtaining an undrawn polyethylene terephthalate film. Next, the thus obtained film was drawn at a draw ratio of 3.4 times in a longitudinal direction thereof while passing through a group of heated rolls at 85°C by utilizing a difference between peripheral speeds of the rolls. Thereafter, an aqueous coating solution 1 shown in the below-mentioned Table 1 was applied on one surface of the thus obtained longitudinally drawn film. Then, the thus coated longitudinally drawn film was introduced into a tenter drawing machine in which the film was drawn at 100°C at a draw ratio of 4.0 times in a lateral direction thereof and then subjected to heat-setting at 230°C. Then, the obtained drawn film was relaxed by 2% in a lateral direction thereof, thereby obtaining a biaxially oriented polyethylene terephthalate film having a thickness of 25 μm which was provided on the surface thereof with a coating layer having a thickness of 0.02 μm (after dried).

Comparative Example 11:

The same procedure as in Example 1 was conducted except that no coating layer was formed, thereby obtaining a polyester film. As a result of evaluating the thus obtained film, it was confirmed that the film exhibited a large increase in haze of the film owing to the heat treatment and a large amount of the ester cyclic trimer deposited thereon, as well as had such a fear that it suffered from disadvantages such as contamination of the process and deterioration in visibility owing to whitening after heated.

Table 1

| Coating solution | Coating agent composition based on nonvolatile components (%) | | | | | |
|---|---|---|---|---|---|---|
| | A1 | B1 | B2 | B3 | B4 | B5 |
| 1 | 2 | 35 | 0 | 15 | 0 | 0 |
| 2 | 5 | 35 | 0 | 20 | 0 | 0 |
| 3 | 30 | 30 | 0 | 10 | 0 | 0 |
| 4 | 10 | 20 | 0 | 10 | 0 | 0 |
| 5 | 5 | 70 | 0 | 10 | 0 | 0 |
| 6 | 5 | 0 | 25 | 15 | 0 | 10 |
| 7 | 5 | 45 | 0 | 0 | 0 | 0 |
| 8 | 5 | 0 | 0 | 85 | 0 | 0 |
| 9 | 5 | 0 | 0 | 15 | 0 | 0 |
| 10 | 5 | 0 | 0 | 0 | 40 | 0 |
| 11 | 5 | 0 | 0 | 0 | 0 | 0 |
| 12 | 3 | 0 | 0 | 0 | 0 | 0 |
| 13 | 90 | 0 | 0 | 0 | 0 | 0 |
| 14 | 0 | 35 | 0 | 15 | 0 | 0 |
| 15 | 0 | 20 | 0 | 20 | 0 | 0 |
| 16 | 0 | 0 | 25 | 20 | 0 | 10 |
| 17 | 0 | 0 | 0 | 90 | 0 | 0 |
| 18 | 0 | 0 | 0 | 15 | 0 | 0 |
| 19 | 0 | 0 | 0 | 0 | 40 | 0 |
| 20 | 0 | 0 | 0 | 0 | 0 | 0 |

Table 1 (continued)

| Coating solution | Coating agent composition based on nonvolatile components (%) | | | | | |
|---|---|---|---|---|---|---|
| | C1 | C2 | C3 | C4 | F1 | F2 |
| 1 | 38 | 0 | 0 | 0 | 0 | 10 |
| 2 | 35 | 0 | 0 | 0 | 0 | 5 |
| 3 | 25 | 0 | 0 | 0 | 0 | 5 |
| 4 | 55 | 0 | 0 | 0 | 0 | 5 |
| 5 | 10 | 0 | 0 | 0 | 0 | 5 |
| 6 | 35 | 0 | 0 | 0 | 0 | 10 |
| 7 | 40 | 0 | 0 | 0 | 0 | 10 |
| 8 | 0 | 0 | 0 | 0 | 10 | 0 |
| 9 | 75 | 0 | 0 | 0 | 5 | 0 |
| 10 | 25 | 0 | 25 | 0 | 5 | 0 |
| 11 | 70 | 20 | 0 | 0 | 0 | 5 |
| 12 | 40 | 0 | 32 | 20 | 5 | 0 |
| 13 | 0 | 0 | 0 | 0 | 10 | 0 |
| 14 | 40 | 0 | 0 | 0 | 0 | 10 |
| 15 | 55 | 0 | 0 | 0 | 0 | 5 |
| 16 | 35 | 0 | 0 | 0 | 0 | 10 |
| 17 | 0 | 0 | 0 | 0 | 10 | 0 |
| 18 | 80 | 0 | 0 | 0 | 5 | 0 |
| 19 | 30 | 0 | 25 | 0 | 5 | 0 |
| 20 | 70 | 25 | 0 | 0 | 0 | 5 |

Table 2

| Examples | Film thickness (μm) | A layer | | B layer | |
|---|---|---|---|---|---|
| | | Raw material | Ester cyclic trimer (wt%) | Raw material | Ester cyclic trimer (wt%) |
| Example 1 | 125 | B/E | 0.53 | A | 0.97 |
| Example 2 | 125 | B/E | 0.53 | A | 0.97 |
| Example 3 | 125 | B/E | 0.53 | A | 0.97 |
| Example 4 | 125 | B/E | 0.53 | A | 0.97 |
| Example 5 | 125 | B/E | 0.53 | A | 0.97 |
| Example 6 | 125 | B/E | 0.53 | A | 0.97 |
| Example 7 | 125 | B/E | 0.53 | A | 0.97 |
| Example 8 | 125 | B/E | 0.53 | A | 0.97 |
| Example 9 | 125 | B/E | 0.53 | A | 0.97 |
| Example 10 | 125 | B/E | 0.53 | A | 0.97 |
| Example 11 | 125 | B/E | 0.53 | A | 0.97 |
| Example 12 | 125 | B/E | 0.53 | A | 0.97 |
| Example 13 | 125 | B/E | 0.53 | A | 0.97 |
| Example 14 | 188 | B/E | 0.53 | A | 0.97 |
| Example 15 | 50 | B/E | 0.53 | A | 0.97 |
| Example 16 | 25 | B/E | 0.53 | A | 0.97 |
| Example 17 | 25 | A/E | 0.94 | D | 0.50 |
| Example 18 | 25 | D/E | 0.56 | D | 0.50 |
| Example 19 | 25 | D/E | 0.56 | D | 0.50 |
| Example 20 | 25 | D/E | 0.56 | D | 0.50 |

Table 2 (continued))

| Examples | Thickness ratio | | | Coating solution | Coating layer thickness (μm) |
|---|---|---|---|---|---|
| | A | B | A | | |
| Example 1 | 4 | 117 | 4 | 1 | 0.02 |
| Example 2 | 4 | 117 | 4 | 2 | 0.02 |
| Example 3 | 4 | 117 | 4 | 2 | 0.10 |
| Example 4 | 4 | 117 | 4 | 3 | 0.02 |
| Example 5 | 4 | 117 | 4 | 4 | 0.02 |
| Example 6 | 4 | 117 | 4 | 5 | 0.02 |
| Example 7 | 4 | 117 | 4 | 6 | 0.02 |
| Example 8 | 4 | 117 | 4 | 7 | 0.02 |
| Example 9 | 4 | 117 | 4 | 8 | 0.02 |
| Example 10 | 4 | 117 | 4 | 9 | 0.04 |
| Example 11 | 4 | 117 | 4 | 10 | 0.04 |
| Example 12 | 4 | 117 | 4 | 11 | 0.05 |
| Example 13 | 4 | 117 | 4 | 12 | 0.05 |
| Example 14 | 5 | 178 | 5 | 1 | 0.02 |
| Example 15 | 2.5 | 45 | 2.5 | 1 | 0.02 |
| Example 16 | 1.5 | 22 | 1.5 | 1 | 0.02 |
| Example 17 | 1.5 | 22 | 1.5 | 1 | 0.02 |
| Example 18 | 1.5 | 22 | 1.5 | 1 | 0.02 |
| Example 19 | 1.5 | 22 | 1.5 | 3 | 0.02 |
| Example 20 | 1.5 | 22 | 1.5 | 13 | 0.01 |

Table 2 (continued)

| Comparative Examples | Film thickness (µm) | A layer | | B layer | |
|---|---|---|---|---|---|
| | | Raw material | Ester cyclic trimer (wt%) | Raw material | Ester cyclic trimer (wt%) |
| Comparative Example 1 | 125 | B/E | 0.53 | A | 0.97 |
| Comparative Example 2 | 125 | B/E | 0.53 | A | 0.97 |
| Comparative Example 3 | 125 | B/E | 0.53 | A | 0.97 |
| Comparative Example 4 | 125 | B/E | 0.53 | A | 0.97 |
| Comparative Example 5 | 125 | B/E | 0.53 | A | 0.97 |
| Comparative Example 6 | 125 | B/E | 0.53 | A | 0.97 |
| Comparative Example 7 | 125 | B/E | 0.53 | A | 0.97 |
| Comparative Example 8 | 125 | A/E | 0.94 | A | 0.97 |
| Comparative Example 9 | 50 | A/E | 0.94 | A | 0.97 |
| Comparative Example 10 | 25 | C/E | 0.98 | C | 1.02 |
| Comparative Example 11 | 125 | B/E | 0.53 | A | 0.97 |

Table 2 (continued))

| Comparative Examples | Thickness ratio | | | Coating solution | Coating layer thickness (µm) |
|---|---|---|---|---|---|
| | A | B | A | | |
| Comparative Example 1 | 4 | 117 | 4 | 14 | 0.02 |
| Comparative Example 2 | 4 | 117 | 4 | 15 | 0.02 |
| Comparative Example 3 | 4 | 117 | 4 | 16 | 0.02 |
| Comparative Example 4 | 4 | 117 | 4 | 17 | 0.02 |
| Comparative Example 5 | 4 | 117 | 4 | 18 | 0.04 |
| Comparative Example 6 | 4 | 117 | 4 | 19 | 0.04 |
| Comparative Example 7 | 4 | 117 | 4 | 20 | 0.05 |
| Comparative Example 8 | 4 | 117 | 4 | 1 | 0.02 |
| Comparative Example 9 | 2.5 | 45 | 2.5 | 1 | 0.02 |
| Comparative Example 10 | 1.5 | 22 | 1.5 | 1 | 0.02 |
| Comparative Example 11 | 4 | 117 | 4 | - | - |

Table 3

| Examples | Film haze (%) | Increase in haze ΔH (%) | Amount of ester cyclic trimer deposited ($mg/m^2$) |
|---|---|---|---|
| Example 1 | 1.3 | 0.1 | 0.3 |
| Example 2 | 1.3 | 0.0 | 0.3 |
| Example 3 | 2.8 | 0.0 | 0.1 |
| Example 4 | 2.1 | 0.1 | 0.2 |
| Example 5 | 1.3 | 0.1 | 0.2 |
| Example 6 | 1.2 | 0.1 | 0.1 |
| Example 7 | 1.3 | 0.1 | 0.3 |
| Example 8 | 1.4 | 0.2 | 0.3 |
| Example 9 | 1.3 | 0.5 | 0.6 |
| Example 10 | 1.4 | 0.4 | 0.5 |
| Example 11 | 1.4 | 0.2 | 0.4 |
| Example 12 | 1.3 | 0.4 | 0.6 |
| Example 13 | 1.3 | 0.2 | 0.4 |
| Example 14 | 1.5 | 0.1 | 0.2 |
| Example 15 | 1.1 | 0.1 | 0.3 |
| Example 16 | 1.0 | 0.2 | 0.3 |
| Example 17 | 1.0 | 0.1 | 0.3 |
| Example 18 | 0.9 | 0.0 | 0.1 |
| Example 19 | 1.5 | 0.0 | 0.1 |
| Example 20 | 1.3 | 0.5 | 0.6 |

Table 3 (continued)

| Comparative Examples | Film haze (%) | Increase in haze ΔH (%) | Amount of ester cyclic trimer deposited ($mg/m^2$) |
|---|---|---|---|
| Comparative Example 1 | 1.3 | 0.6 | 0.7 |
| Comparative Example 2 | 1.2 | 0.7 | 0.8 |
| Comparative Example 3 | 1.3 | 0.6 | 0.7 |
| Comparative Example 4 | 1.4 | 1.1 | 1.2 |
| Comparative Example 5 | 1.3 | 1.0 | 1.1 |
| Comparative Example 6 | 1.4 | 1.0 | 1.0 |
| Comparative Example 7 | 1.4 | 0.9 | 1.3 |
| Comparative Example 8 | 1.3 | 0.6 | 0.7 |
| Comparative Example 9 | 1.0 | 0.7 | 0.7 |
| Comparative Example 10 | 1.0 | 0.6 | 0.7 |
| Comparative Example 11 | 1.0 | 1.8 | 2.3 |

INDUSTRIAL APPLICABILITY

The coated film of the present invention can be suitably used, for example, as a base material for a transparent conductive laminate, in the applications requiring such a performance as to exhibit an extremely less increase in film haze and a less amount of an ester cyclic trimer deposited thereon even after subjected to a severe heat treatment step in which the film is exposed to a high-temperature atmosphere for a long period of time.

## Claims

1. A coated film comprising a single-layer polyester film having an ester cyclic trimer content of not more than 0.7% by weight or a multilayer polyester film comprising a polyester surface layer having an ester cyclic trimer content of not more than 0.7% by weight, and a coating layer formed on at least one surface of the single-layer polyester film or multilayer polyester film, the coating layer being formed from a coating solution comprising a polyvalent aldehyde-based compound and an ammonium group-containing polymer, wherein a content of the polyvalent aldehyde-based compound in the coating solution is in the range of 1 to 50% by weight based on a total weight of whole non-volatile components in the coating solution, and wherein a content of the ammonium group-containing polymer in the coating solution is in the range of 5 to 80% by weight based on a total weight of whole non-volatils components in the coating solution.

2. The coated film according to claim 1, wherein a thickness of the single-layer polyester film or multilayer polyester film is 10 to 300 μm, and a thickness of the surface layer of the multilayer polyester film is not less than 1.5 μm.

3. The coated film according to claim 1 or 2, wherein the polyester film has a multilayer structure having three layers constituted of two kinds of materials.

4. The coated film according to any one of claims 1 to 3, wherein the polyvalent aldehyde-based compound is an acetalization reaction product obtained from a polyvalent aldehyde compound and a polyhydric alcohol.

5. The coated film according to any one of claims 1 to 4, wherein the coating solution further comprises at least one compound selected from the group consisting of a polyvinyl alcohol and a crosslinking agent.

6. The coated film according to claim 5, wherein a content of each of the polyvinyl alcohol and the crosslinking agent in the coating solution is in the range of 5 to 80% by weight based on a total weight of whole non-volatile components in the coating solution.

## Patentansprüche

1. Beschichtete Folie, umfassend eine einlagige Polyesterfolie mit einem Gehalt an cyclischem Estertrimer von nicht mehr als 0,7 Gew.-% oder eine mehrlagige Polyesterfolie, umfassend eine Polyesteroberflächenschicht mit einem Gehalt an cyclischem Estertrimer von nicht mehr als 0,7 Gew.-%, und eine Überzugsschicht, gebildet auf mindestens einer Oberfläche der einlagigen Polyesterfolie oder mehrlagigen Polyesterfolie, wobei die Überzugsschicht aus einer Beschichtungslösung gebildet ist, umfassend eine mehrwertige Aldehyd-basierte Verbindung und ein ammoniumgruppenhaltiges Polymer, wobei ein Gehalt der mehrwertigen Aldehyd-basierten Verbindung in der Beschichtungslösung in dem Bereich von 1 bis 50 Gew.-% liegt, basierend auf dem Gesamtgewicht der gesamten nichtflüchtigen Komponenten in der Beschichtungslösung, und wobei ein Gehalt des ammoniumgruppenhaltigen Polymers in der Beschichtungslösung in dem Bereich von 5 bis 80 Gew.-% liegt, basierend auf einem Gesamtgewicht der gesamten nichtflüchtigen Komponenten in der Beschichtungslösung.

2. Beschichtete Folie nach Anspruch 1, wobei eine Dicke der einlagigen Polyesterfolie oder mehrlagigen Polyesterfolie 10 bis 300 $\mu$m beträgt, und eine Dicke der Oberflächenschicht der mehrlagigen Polyesterfolie nicht weniger als 1,5 $\mu$m beträgt.

3. Beschichtete Folie nach Anspruch 1 oder 2, wobei die Polyesterfolie eine Mehrlagenstruktur mit drei Schichten, die aus zwei Arten von Materialien aufgebaut sind, aufweist.

4. Beschichtete Folie nach irgendeinem der Ansprüche 1 bis 3, wobei die mehrwertige Aldehyd-basierte Verbindung ein Acetalisierungsreaktionsprodukt ist, erhalten aus einer mehrwertigen Aldehydverbindung und einem mehrwertigen Alkohol.

5. Beschichtete Folie nach irgendeinem der Ansprüche 1 bis 4, wobei die Beschichtungslösung weiterhin mindestens eine Verbindung umfasst, gewählt aus der Gruppe, bestehend aus einem Polyvinylalkohol und einem Vernetzungsmittel.

6. Beschichtete Folie nach Anspruch 5, wobei ein Gehalt von jeweils dem Polyvinylalkohol und dem Vernetzungsmittel in der Beschichtungslösung in dem Bereich von 5 bis 80 Gew.-% liegt, basierend auf einem Gesamtgewicht der gesamten nichtflüchtigen Komponenten in der Beschichtungslösung.

## Revendications

1. Un film revêtu comprenant un film de polyester monocouche ayant une teneur en trimère cyclique d'ester non supérieure à 0,7% en poids ou un film de polyester multicouches comprenant une couche de surface de polyester ayant une teneur en trimère cyclique d'ester non supérieure à 0,7% en poids, et une couche de revêtement formée sur au moins une surface du film de polyester monocouche ou du film de polyester multicouches, la couche de revêtement étant formée à partir d'une solution de revêtement comprenant un composé à base d'aldéhyde polyvalent et d'un polymère contenant un groupe ammonium, dans lequel la teneur du composé à base d'aldéhyde polyvalent dans la solution de revêtement se situe dans l'intervalle de 1 à 50% en poids par rapport à un poids total de composants non volatils entiers dans la solution de revêtement, et dans lequel la teneur du polymère contenant un groupe ammonium dans la solution de revêtement se situe dans l'intervalle de 5 à 80% en poids par rapport à un poids total de composants non volatils dans la solution de revêtement.

2. Le film revêtu selon la revendication 1, dans lequel une épaisseur du film de polyester monocouche ou du film de

polyester multicouches est comprise entre 10 et 300 μm, et une épaisseur de la couche de surface du film de polyester multicouches n'est pas inférieure à 1,5 μm.

**3.** Le film revêtu selon la revendication 1 ou 2, dans lequel le film de polyester a une structure multicouches ayant trois couches constituées de deux types de matériaux.

**4.** Le film revêtu selon l'une quelconque des revendications 1 à 3, dans lequel le composé à base d'aldéhyde polyvalent est un produit de réaction d'acétylisation obtenu à partir d'un composé d'aldéhyde polyvalent et d'un alcool polyhydrique.

**5.** Le film revêtu selon l'une quelconque des revendications 1 à 4, dans lequel la solution de revêtement comprend en outre au moins un composé choisi parmi le groupe constitué d'un alcool polyvinylique et d'un agent de réticulation.

**6.** Le film revêtu selon la revendication 5, dans lequel un contenu de chacun de l'alcool polyvinylique et de l'agent de réticulation dans la solution de revêtement se situe dans l'intervalle de 5 à 80% en poids par rapport à un poids total de composants non volatils dans la solution de revêtement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007042473 A
- JP 2007200823 A
- JP 2007320144 A
- JP 2006181770 A
- JP 2003238734 A